# EUROPEAN PATENT APPLICATION

(11) **EP 0 697 653 A1**
(43) Date of publication of application: **21.02.1996**
(21) Application number: 95112618.4
(22) Date of filing: 10.08.1995
(51) Int. Cl.: G06F 9/46

(54) **Processor system and method for controlling the same**

(30) Priority: 10.08.1994 JP 188147/94
(71) Applicant: NEC CORPORATION, Tokyo (JP)
(72) Inventor: Motomura, Masato, c/o NEC Corp., Tokyo (JP); Torii, Sunao, c/o NEC Corp., Tokyo (JP)
(74) Representative: Betten & Resch

(57) **Abstract**

A processor system comprises, in addition to a plurality of processors, a thread managing circuit which includes a load status table containing a corresponding number of load status counters each holding the load status of the corresponding processor. Each of the processor can access all the load status counters to know the dynamic load status of all the processors and to control the parallelism by using the dynamic load status of all the processors.

## Description

### Background of the Invention

### Field of the invention

The present invention relates to a processor which constitutes the core of a data processing system, and more specifically to a processor system executing a parallel processing while forking threads between a plurality of processors.

### Description of related art

Conventionally, a processor realizes an overall processing intended by a program, by repeating a procedure in which one instruction is read out from a program constituted of a strings of instructions, and then, the read-out instruction is decoded and an instructed processing is executed. In this process, data required for execution of the program is read out from a memory in accordance with the directions of the instructions, if necessary, and the result of the execution is written into the memory. This fundamental operation of the conventional processor is an internal sequential processing executed in the directions of the instructions described in the program, and a section in charge of this processing is generally called as an "instruction pipeline".

On the other hand, when a processor system including the above mentioned processor is constituted, in addition to the internal operation realized by the instruction pipeline there is required to provide an interface between an external and the processor, for the purpose controlling an instrument provided externally of the processor, or for the purpose of receiving a control given from an external instrument. As a conventional technique for controlling the external instrument from the processor, a memory mapped I/O (input/output) system and a special instruction controlled system have been known. As a conventional technique for controlling the processor from the external, an interrupt processing has been known. These conventional technique can be known by referring to David L. Patterson and John A. Hennessy "Computer Organization and Design : The Hardware / Software Interface" Morgan Kaufmann Publishers Inc., pp 566-571, the disclosure of which is incorporated by reference in its entirety into the present application.

Ordinarily, when an external interrupt is notified to the processor, the program being executed in the processor is switched from a user's program to an interrupt processing program (called an "interrupt handler"), and the interrupt handler performs a processor corresponding to the notified interrupt, and thereafter, the operation returns to the user's program that had been executed when the interrupt was notified, or another program is started if necessary. Thus, since the program being executed in the processor is switched, the environment for executing the program is correspondingly changed. Here, the environment for executing the program, includes data stored in a register file, a program counter, and a content of a process control block. In addition, when the environment for executing the program is changed, it is necessary to save the execution environment into the memory, for the purpose of using the execution environment again later. Since these overheads are inevitable, it is known that the interrupt processing ordinarily needs a considerably long time. This problem is described in detail in Thomas E. Anderson, Henry M. Levy, Brian N. Bershad and Edward D, Lazowska "The Interaction of Architecture and Operating System Design" Proceedings of Fourth International Conference on Architectual Support for Programming Languages and Operating Systems, pp 108-120, the disclosure of which is incorporated by reference in its entirety into the present application.

On the other hand, in a processor system including a plurality of processors for the purpose of a parallel processing, communication between the processors is frequently performed. This is because a communication for a sharing of the processing and for synchronization is inevitably increased. In the processor system including conventional processors, the above mentioned inter-processor communication has been realized by means of the interrupt processing. Therefore, a large overhead exists for the inter-processor communication processing, and this has become a bottle neck in elevating performance of the parallel processing.

In order to overcome the above mentioned problem, in the prior art there has been proposed a processor architecture called a "multithreaded architecture". Here, the thread is an instruction string composed of a plurality of instructions, and one program can be defined to be a set of a plurality of threads. In the multithreaded architecture, the processing is shared in units of thread into a plurality of processors, so that the threads are processed in parallel. Because of this, the multithreaded architecture is characterized by comprising a mechanism and instructions for allowing a thread being executed in one processor to generate a new thread on another processor, and a mechanism and instructions for synchronizing a thread being executed in one processor and another thread being executed in another processor.

The present invention proposes a novel technique for thread generation. First, the technique of the multithreaded architecture will be explained.

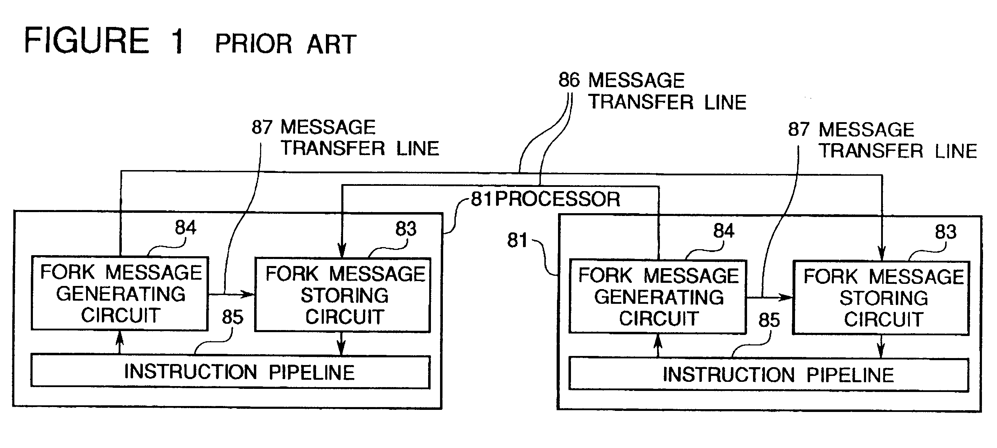

Referring to Figure 1, there is shown a block diagram illustrating a processor system based on the conventional multithreaded architecture.

As shown in Figure 1, the processor system includes a plurality of processors 81, each of which comprises an instruction pipeline 85, a fork message generating circuit 84 and a fork message storing circuit 83.

Here, "to generate a new thread on another processor" will be called "to fork a thread" in this specification. The architecture of each processor 81 contains a fork instruction in an instruction set thereof. Here, the fork instruction is an instruction indicating to fork a thread. When this fork instruction is executed in the instruction pipeline 85 of some processor 81, the thread is forked. In general, the fork instruction gives, as an argument, the directions as to (1) to which of the processors 81 the thread is forked, (2) what thread is forked, or (3) for what data the processing is forked. Ordinarily, the directions of (1) is given by directly giving the number of the processor, or by decoding the value of another argument. It is in many cases that the directions of (2) is given as a head instruction address of the thread, and the directions of (3) is given as a head address of a stack region used by the thread concerned.

When the fork instruction is executed in some processor 81, the fork message is transferred through a message transfer line 86 to the processor 81 designated as a fork destination, so that the fork message is received by and stored in the fork message storing circuit 83 of the fork destination processor. The fork message includes information given as the argument of the fork instruction. The processor 81 receiving the fork message, decodes the fork message by use of the fork message storing circuit 83, and starts to execute the designated thread by use of the instruction pipeline 85. Such a situation can be generally expected that when the processor 81 has received the fork message, that processor 81 is executing another thread. In order to comply this situation, the fork message storing circuit 83 is required to have a mechanism capable of storing a plurality of fork messages. Namely, as soon as execution of the thread in the processor 81 has been completed, one fork message is selected in accordance with a schedule rule from a plurality of fork messages stored in the fork message storing circuit 83, and execution of the thread designated by the selected fork message is started by use of the instruction pipeline 85. Here, the schedule rule is based on a simple first-in first-out or last-in first-out, or a priority level.

A typical example of the above mentioned multithreaded architecture is shown by R. S. Nikhil, G. M. Papadopoulos and Arvind, "*T: A Multithreaded Massively Parallel Architecture", Proceedings of 19th International Symposium on Computer Architecture, pp 156-167. In this paper, the above mentioned fork instruction is called a start instruction. The disclosure of this paper is incorporated by reference in its entirety into the present application.

The above mentioned multithreaded architecture can greatly reduce the overhead of the inter-processor communication when the parallel processing is executed by a plurality of processors. Therefore, it is advantageous since it is possible to divide the processing into fine units, so that parallelism of fine units that exist in the program can be effectively utilized.

However, the conventional multithreaded architecture is disadvantageous in that it is difficult to control the parallelism.

As seen from Figure 1, in the conventional multithreaded architecture, if one processor 81 forks the thread, the other or receiver side processor 81 cannot take no other way than receiving and storing the fork message. In other words, the sender side processor 81 can send the fork message one-sidedly, and on the other hand, the receiver side processor 18 must receive the fork message compulsorily. For example, as seen from a case in which each iteration of a loop having a great number of repetitions is forked as a thread, the restriction of this architecture results in a situation in which unnecessary parallelism is extracted, and the performance drops in the following points:
(A) The fork message storing circuit 81 can store only a constant limited number of fork messages. Therefore, when it is forced to store the fork messages of the number larger than the constant limited number, it is necessary to save the fork messages stored in the fork message storing circuit 81 to a main memory by means of an interrupt processing. This becomes a large overhead.
(B) When a large number of threads are forked, many threads are not executed until a considerably later stage. Therefore, a thread required to be in synchronism with the thread not executed until a considerably later stage, will be put in a wait condition for a very long time. As a result, an effectivity of use drops, and therefore, the processing performance lowers.

Incidentally, if the elevation of the performance cannot be expected even if the forking is made, it is considered to cancel the forking by means of the interrupt processing, so as to improve a situation in which the sender side processor forks one-sidedly. However, this method becomes a large overhead caused by the interrupt processing. In any way, it is not possible to avoid the drop of the performance.

As mentioned above, the processor system composed of a plurality of processors on the basis of the conventional multithreaded architecture is difficult to control the parallelism, and therefore, dependently upon a load situation of the processor system, the threads are forked at a degree exceeding an appropriate degree required to effectively utilizing the processors, rather resulting in drop of the performance.

### Summary of the Invention

Accordingly, it is an object of the present invention to provide a processor system and a method for controlling the same, which have overcome the above mentioned defect of the conventional one.

Another object of the present invention is to provide a processor system having a means for dynamically controlling the parallelism, and a method for dynamically controlling the parallelism in the processor system, whereby execution of the parallel processing utilizing the threads can be made efficient.

The above and other objects of the present invention are achieved in accordance with the present invention by a processor system comprising:
a plurality of processors each including a fork message generating means for outputting to another processor a fork message forking a thread composed of a plurality of instructions, a fork message storing means for storing a fork message supplied from another processor, and an instruction pipeline means receiving the fork message from the fork message storing means for sequentially executing the instructions included in the threads included in the received fork message, each processor being provided with a control method including a fork instruction for forking a thread, so that when the fork instruction is executed in one processor of the processor, the thread is forked, and on the other hand, the thread forked by another processor of the processors is supplied through the fork message generating means of the another processor, whereby the plurality of instructions of the thread are executed by the instruction pipeline means so as to realize a parallel processing, and
a thread managing means provided in common to the processors, and having a plurality of load status counters each provided for a corresponding processor of the processors to indicate a load status of the corresponding processor, all of the load status counters being accessible from each of the processors.

According to another aspect of the present invention, there is provided a method for controlling the processor system defined above, wherein when the fork instruction is executed by one processor of the processors so that the thread is forked in the one processor, the load status counters are referred to by the one processor.

In a first embodiment, a load status counter lock instruction is previously defined, and when the load status counter lock instruction is executed by one processor of the processors, the one processor locks the load status counters in the thread managing means so that the value of the load status counters cannot be updated by the processors other than the one processor.

Furthermore, a load status counter unlocking instruction is previously defined, and when the load status counter unlocking instruction is executed by one processor of the processors, the one processor unlocks the load status counters in the thread managing means so that the value of the load status counters can be updated by the processors other than the one processor.

In a second embodiment, the load status counters are unlocked when the fork instruction is executed by one processor of the processors so that the thread is forked in the one processor.

In a third embodiment, when the fork instruction is executed by one processor of the processors so that the thread is forked in the one processor, the value of a corresponding load status counter of the load status counters is increased, and when execution of the thread is completed by the one processor, the value of a corresponding load status counter of the load status counters is decreased.

In a fourth embodiment, when the fork instruction is executed by one processor of the processors so that the thread is forked in the one processor, the thread managing means is exclusively referred to by the one processor so as to compare whether or not the value of the load status counters is not higher than a predetermined constant value, for the purpose of discriminating whether or not the thread can be forked, so that when the thread can be forked, the thread is forked and when the thread cannot be forked, the one processor sequentially executes the thread.

In a fifth embodiment, when the fork instruction is executed by one processor of the processors so that the thread is forked in the one processor, the value of the load status counters is referred to so as to determine which of the processors should execute the thread forked.

In a sixth embodiment, when a thread security instruction is previously defined, and wherein when the thread security instruction is executed by one processor of die processors, the one processor refers to the thread managing means so as to ascertain whether or not the thread is forked, so that if the thread can be forked, the value of a corresponding load status counter is increased.

The above and other objects, features and advantages of the present invention will be apparent from the following description of preferred embodiments of the invention with reference to the accompanying drawings.

### Brief Description of the Drawings

Figure 1 is a block diagram illustrating a processor system based on the conventional multithreaded architecture;
Figure 2 is a block diagram of a first embodiment of the processor system comprising processors and thread managing circuit in accordance with the present invention;
Figure 3 is a block diagram of a second embodiment of the thread managing circuit in accordance with the present invention;
Figure 4 is a block diagram of a third embodiment of the thread managing circuit in accordance with the present invention;
Figure 5 is a block diagram of a fourth embodiment of the thread managing circuit in accordance with the present invention;
Figure 6 is a block diagram of a second embodiment of the processor in accordance with the present invention;
Figure 7 is a block diagram of a second embodiment of the processor system in accordance with the present invention; and
Figure 8 is a block diagram of a third embodiment of the processor system in accordance with the present invention; and

### Description of the Preferred embodiments

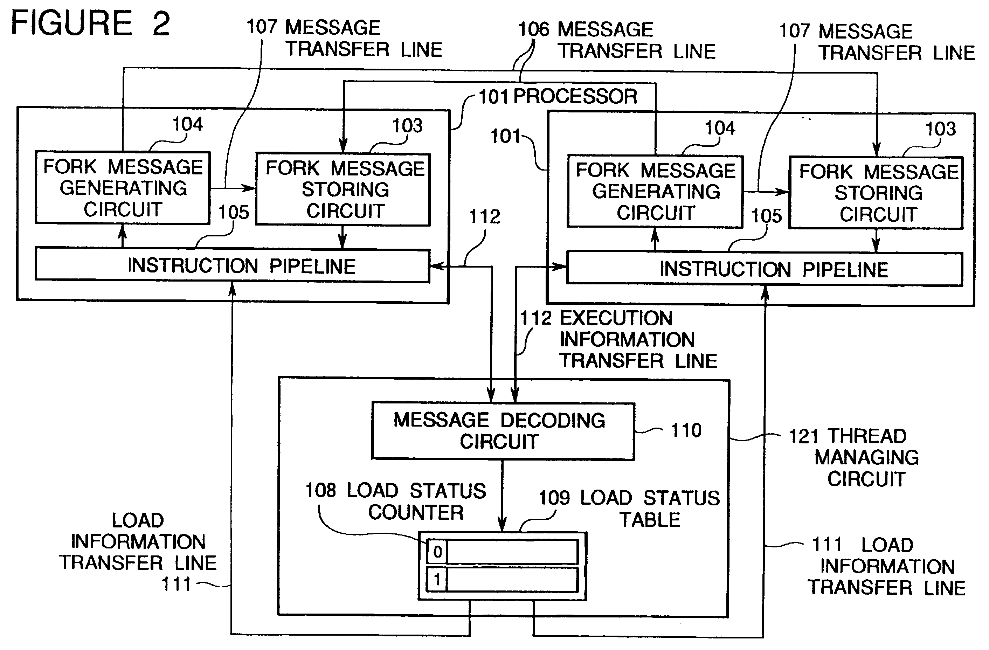

Referring to Figure 2, there is shown a block diagram of a first embodiment of the processor system comprising processors and thread managing circuit in accordance with the present invention.

As shown in Figure 2, the processor system includes a plurality of processors 101, each of which comprises an instruction pipeline 105, a fork message generating circuit 104 and a fork message storing circuit 103. The fork message generating circuit 104 of one processor and the fork message storing circuit 103 of the other processor are interconnected through a massage transfer line 106, and also, in each of the processors 101, the fork message generating circuit 104 and the fork message storing circuit 103 are interconnected through a massage transfer line 107.

First, a fundamental operation when a thread is generated in the first embodiment will be explained. If the instruction pipeline 105 of one processor 101 executes a fork instruction for a thread generation, a fork message is generated in the fork message generating circuit 104 of the one processor 101, and then, transferred to the fork message storing circuit 103 of the other processor designated by the generated fork message. This other processor 101 fetches the fork message from the fork message storing circuit 103 when the execution of the thread being currently executed is completed or interrupted, and then, starts to execute a new thread.

Now, a thread managing circuit 121 in the shown embodiment will be explained. This thread managing circuit 121 comprises a load status table 109 including a load information counter 108 provided for each of the processors, and a message decoding circuit 110. The thread managing circuit 121 collects the execution information of the thread for each of the processor through execution information transfer lines 112, and updates the load status counter 108 for the corresponding processor. Each of the processors can investigate the load information of all the processors, by reading the load status table 109 through a load information transfer line 111. Therefore, each processor 101 uses this load information so as to execute a fork instruction that requires a thread generation to another processor having a light load, so that a load can be distributed.

Incidentally, Figure 2 shows the embodiment of a parallel processing system consisting of two processors, but the number of processors is not limited to only two, and the present invention can be applied to a parallel processing system including more than two processors.

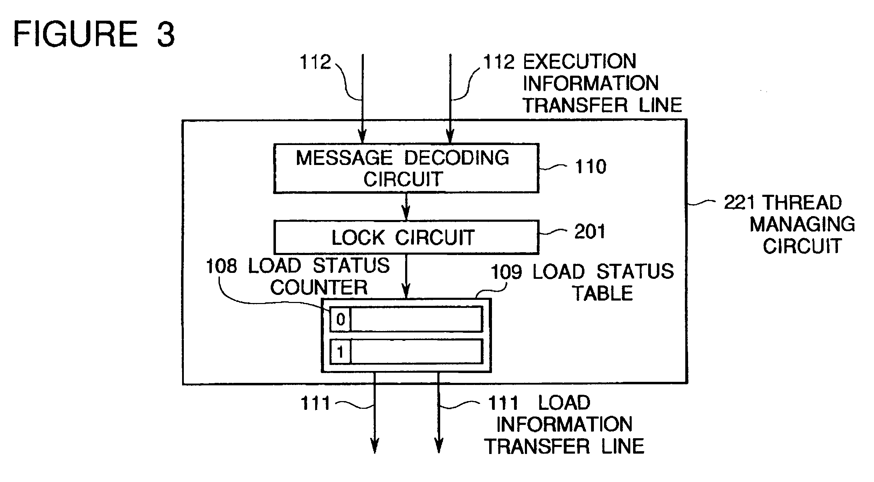

Referring to Figure 3, there is shown a block diagram of a second embodiment of the thread managing circuit in accordance with the present invention, which is used in the first embodiment of the processor system shown in Figure 2. A thread managing circuit 221 shown in Figure 3 is characterized in that a lock circuit 201 for locking the updating of the loads status table 109 is added to the thread managing circuit 121 shown in Figure 2.

In response to a request from each of the processor 101 through the execution information transfer line 112, the lock circuit 201 can set an update inhibition and an update permission of the load status table 109. In addition, when the load status table 109 is in the update inhibition condition, the load status table 109 cannot be updated by a processor other than the processor that has requested the update inhibition.

In this second embodiment, a counter lock instruction is added to instructions of each processor 101, so that when the counter lock instruction is executed by one processor 101, the one processor 101 outputs a lock request to the execution information transfer line 112. When the message decoding circuit 110 decodes the lock request, if the lock circuit 201 is not yet put in a locking condition, the message decoding circuit 110 sets the lock circuit 201 into the locking condition, and also stores an identification number, which is, for example, a processor number or the number designated by the instruction. If the lock circuit 201 is already put in a locking condition, the message decoding circuit 110 outputs information indicating that the execution of the lock instruction fails, to the processor 101 that had outputted the lock request concerned.

Furthermore, in addition to the lock instruction, each processor 101 has a counter unlocking instruction, and when this counter unlocking instruction is executed, the processor 101 outputs an unlocking request onto the execution information transfer line 112. When the message decoding circuit 110 decodes the unlocking request, if the lock circuit 201 is already in a locking condition and if the identification number of the processor outputting the unlocking request is the same as that of the processor that had caused to lock the lock circuit 201, the message decoding circuit 110 unlocks the lock circuit 201. In the other situations, the message decoding circuit 110 outputs information indicating that the execution of the unlocking instruction fails, to the processor 101 that had outputted the unlocking request concerned.

Furthermore, when the processor 101 performs the forking, it defines a fork instruction which simultaneously performs the operation required by the forking and the unlocking instruction. With this, when the forking is performed, it is possible to unlock the load status table 109 without separately executing the unlocking instruction.

By using the counter lock instruction, the counter unlocking instruction and the fork instruction as mentioned above, the following operation becomes possible. First, the counter lock instruction is executed to lock the load status table 109 and to read the value of the load status counters 108. On the basis of the read-out values, a processor which generates threads by the forking is determined, and the forking is executed. With this processing, it is possible to distribute the load as equally as possible, and to realize the parallel processing considering a data arrangement. In addition, when the forking is executed, the lock of the load status table 109 is automatically unlocked at the time of forking, and therefore, it is not necessary to execute the unlocking instruction. Dependently upon the values monitored, it is considered in some cases that it is recommendable not to perform the forking. In these cases, the unlocking instruction is executed, a sequential processing is performed without performing the forking.

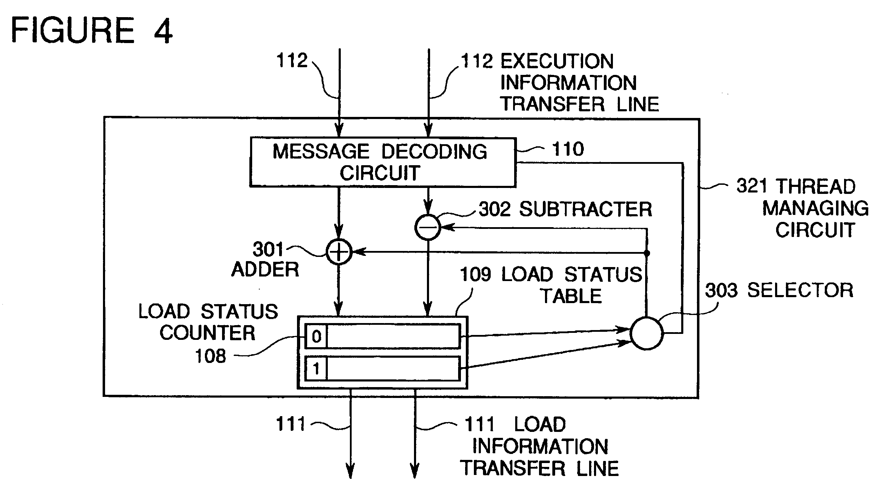

Referring to Figure 4, there is shown a block diagram of a third embodiment of the thread managing circuit in accordance with the present invention, which is used in the first embodiment of the processor system shown in Figure 2. A thread managing circuit 321 of this third embodiment is characterized in that an adder 301, a subtracter 302 and a selector 303 are added to the thread managing circuit 121 shown in Figure 2.

The thread managing circuit 321 of the third embodiment receives a thread execution start information through the execution information transfer line 112. This thread execution start information is decoded by the message decoding circuit 110, which in turn controls the selector 303 to cause the selector 303 to select the value of the load status counter 108 corresponding to the processor 101 which has starts the thread execution. By the adder 301, the value of the selected load status counter 108 is added with the number of threads started to be executed, and the result of addition is written into the same selected load status counter 108. Similarly, when a thread execution end information is given through the execution information transfer line, the message decoding circuit 110 uses the subtracter 302 to subtract the number of threads executed from the value of the selected load status counter 108.

The values of the load status table 109 can be referred to by each of the processors 101 through the load information transfer line 111. Therefore, each of the processors can obtain the load information and the thread execution condition of all the processors in the system.

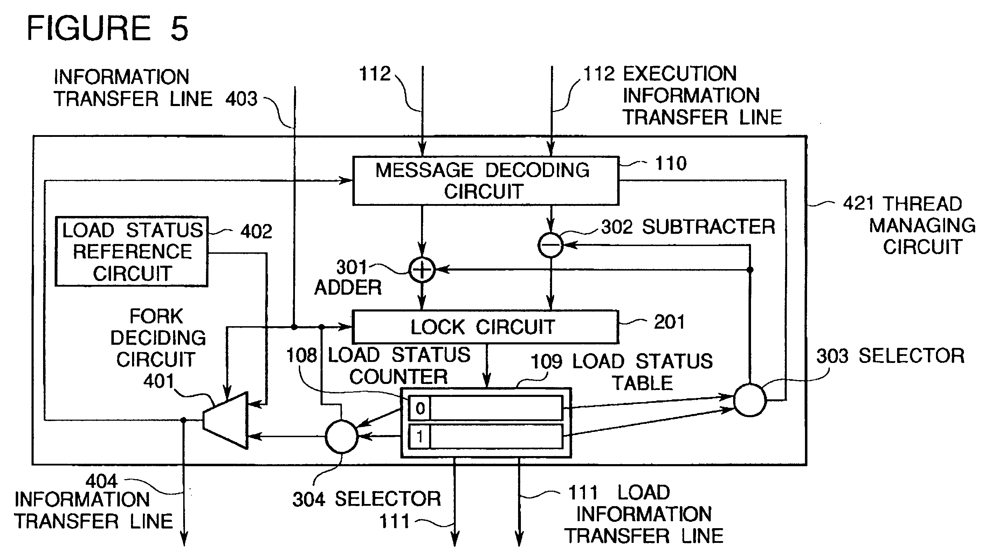

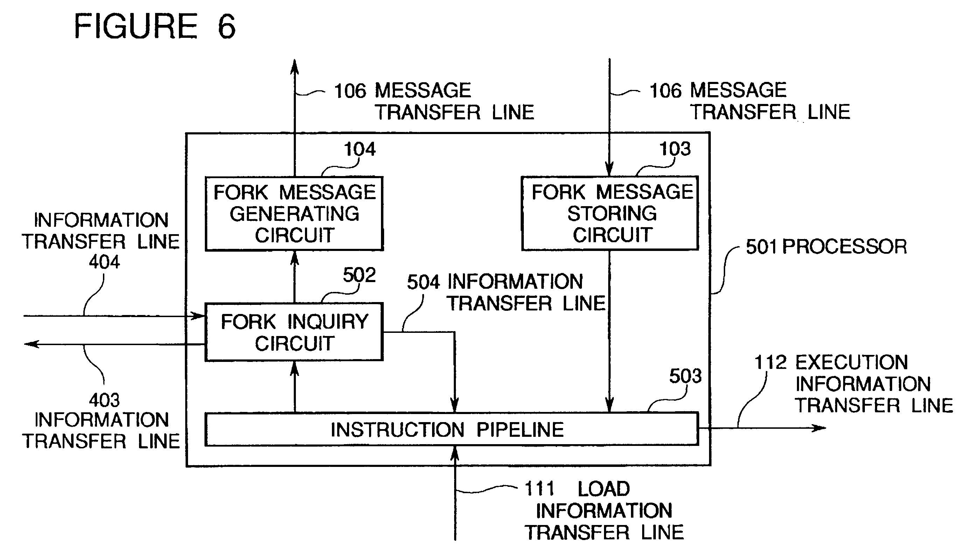

Referring to Figure 5, there is shown a block diagram of a fourth embodiment of the thread managing circuit in accordance with the present invention, which is used in the processor system of the first embodiment shown in Figure 2. Figure 6 shows a block diagram of a second embodiment of the processor in accordance with the present invention, which is used in combination with the thread managing circuit shown in Figure 5.

The thread managing circuit shown in Figure 5 is generally designated with Reference Numeral 421, and is characterized in that the thread managing circuit 321 shown in Figure 4 is added with a fork advisability deciding circuit 401 and a load status reference circuit 402 and the lock circuit 201 provided in the thread managing circuit 221 shown in Figure 3. In addition, the processor shown in Figure 6 is generally designated with Reference Numeral 501, and is characterized in that a fork advisability inquiry circuit 502 is added to the processor 101 shown in Figure 2, and an instruction pipeline 503 has a sequentializing function in addition to the function of the instruction pipeline 102.

Now, operation of this embodiment will be described in the order. If the fork instruction is executed in the instruction pipeline 503, the fork advisability inquiry circuit 502 makes a fork advisability inquiry to the thread managing circuit 421 through an information transfer line 403. In the thread managing circuit 421, the fork advisability inquiry is supplied to the fork advisability deciding circuit 401 and the lock circuit 201. The lock circuit 201 inhibits the updating of the load status table 109. The fork advisability deciding circuit 401 compares a fork allowable reference value of the load status reference circuit 402 with the value (in connection with the fork destination processor designated by the processor 501) supplied from the load status table 109 through a selector 304 controlled by the fork advisability inquiry, for the purpose of deciding the advisability of the forking in the fork destination processor designated by the processor 501. The result of the comparison is supplied through an information transfer line 404 to the fork inquiry circuit 502 of the processor 501. If the forking is advisable, the fork message is generated in the fork message generating circuit 104. If the forking is not advisable, this information is transferred through an information transfer line 504 to the instruction pipeline 503. In this case, the fork instruction is treated to have been executed from the viewpoint of an instruction, but actually, the instruction is treated similarly to a subroutine call in the instruction pipeline 503 so that a sequential processing is automatically performed. With this arrangement, even if the forking is not advisable, the sequential processing is automatically performed by the fork instruction, and therefore, a program code executed in the instruction pipeline 502 does not require to consider the fork advisability decision before the forking and an exception processing when the forking fails. Accordingly, the execution efficiency can be increased, and the size of the code can be reduced. Thus, the fork instruction in this embodiment is an instruction having a new control function for automatic sequentialization in accordance with the load status.

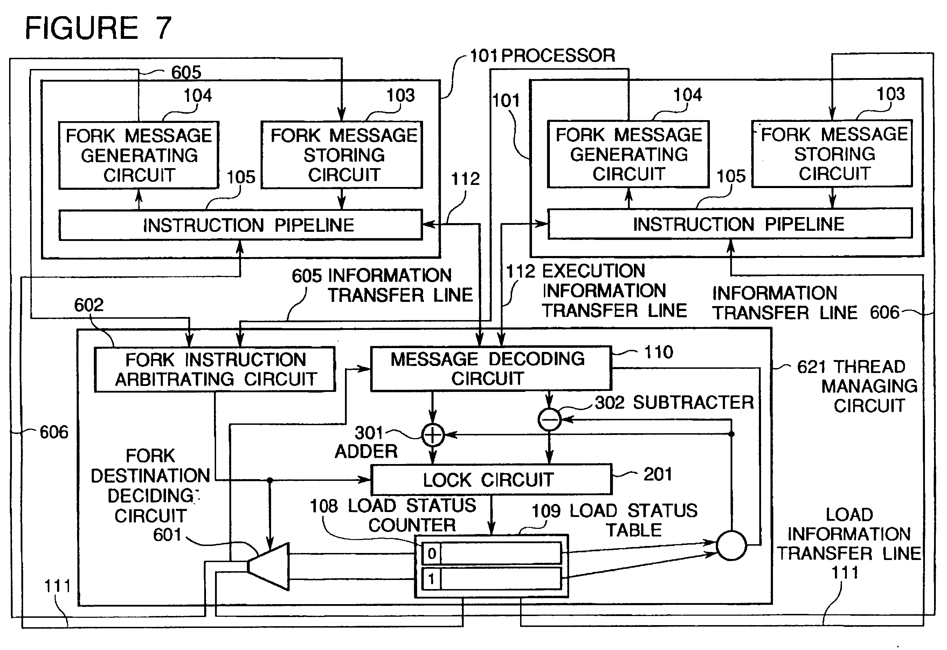

Referring to Figure 7, there is shown a block diagram of a second embodiment of the processor system in accordance with the present invention.

The shown processor system is characterized in a thread managing circuit 621 which comprises, in addition to the thread managing circuit 121 shown in Figure 2, the lock circuit 201 shown in Figure 3, the adder 301, the subtracter 302 and the selector 303 shown in Figure 4 and a mechanism for deciding the number of the processor which should generate the thread to be generated by the fork instruction. This thread generating processor deciding mechanism includes a fork destination deciding circuit 601 and a fork instruction arbitrating circuit 602. Incidentally, in this embodiment, the fork instruction may be either the instruction having a function for automatic sequentialization or an ordinary fork instruction having no automatic sequentialization function.

Now, operation of this embodiment will be explained in the order. When the fork instruction is executed in the instruction pipeline 105 of the processor 101, the fork message generating circuit 104 generates a fork message which does not designate the fork destination, which is in turn transferred through an information transfer line 605 to the fork instruction arbitrating circuit 602 of the thread managing circuit 621. The fork message is arbitrated in the instruction arbitrating circuit 602, which in turn sends a fork destination deciding request to the fork destination deciding circuit 601 . At this time, during a period in which the fork destination deciding is being performed, the update of the load status table 109 is inhibited.

The fork destination deciding circuit 601 compares between the value of the load status counters 108 of the respective processors, so as to decide the number of the fork destination processor by for example selecting the processor corresponding to the load status counter 108 having the smallest value. The result of the deciding is transferred through an information transfer line 606 to the fork message storing apparatus 103 of the designated processor 101, and simultaneously, the value of the load status counter 108 of the corresponding processor is added.

With this arrangement, the processor is not required to designate the thread generating processor, and in addition, it is possible to execute the thread fork instruction considering the load distribution.

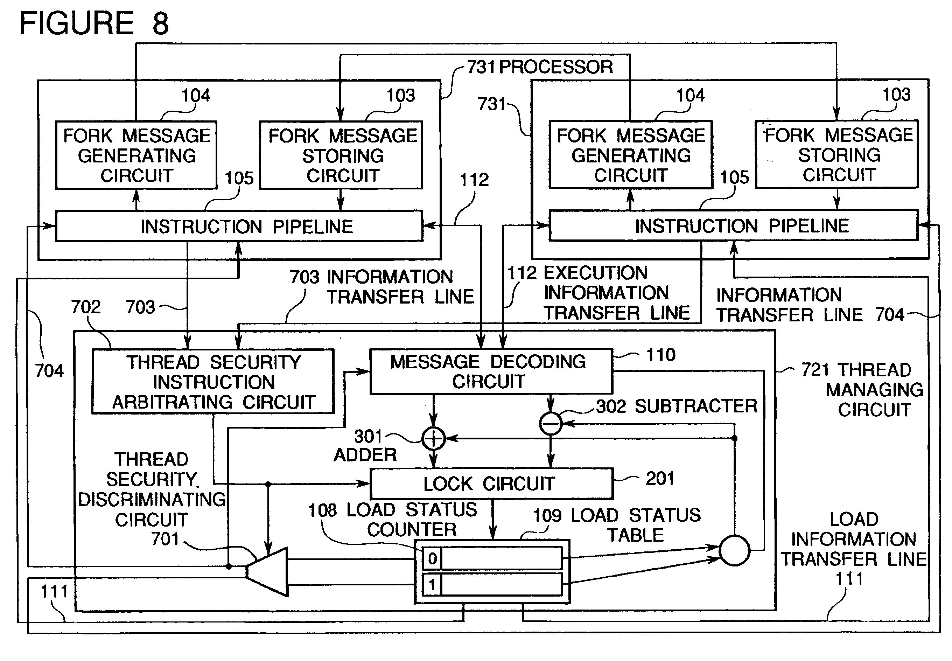

Referring to Figure 8, there is shown a block diagram of a third embodiment of the processor system in accordance with the present invention; and
The shown processor system is characterized in a thread managing circuit 721 which comprises, in addition to the thread managing circuit 121 shown in Figure 2, the lock circuit 201 shown in Figure 3, the adder 301, the subtracter 302 and the selector 303 shown in Figure 4 and a mechanism for previously securing a thread by a thread security instruction. This mechanism for previously securing the thread, includes includes a thread security instruction discriminating circuit 701 and a thread security instruction arbitrating circuit 702.

Now, operation of this embodiment will be explained in the order. When the thread security instruction is executed in the instruction pipeline 105 of a processor 731, the thread security request is supplied through an information transfer line 703 to the thread security instruction arbitrating circuit 702 of the thread managing circuit 721. The thread security request message is arbitrated in the thread security instruction arbitrating circuit 702, which in turn inquires to the thread security instruction discriminating circuit 701, whether or not the thread is secured. In this case, during a period in which the inquiry is being made, the update of the load status table 109. The thread security instruction discriminating circuit 701 compares between the value of the load status counters 108 of the respective processors, so as to decide whether or not the thread can be secured. The result of the deciding is transferred through an information transfer line 704. If the thread can be secured, the value of the load status counter 108 of the corresponding processor is updated.

With this arrangement, since the thread can be secured before the fork instruction is executed, an optimum fork can be performed.

As seen from the above, as the embodiment shown in Figure 2, the processor system in accordance with the present invention has the thread managing means in common to a plurality of processors. The thread managing means includes a load status counter provided for each of the processors to monitor the load status of a corresponding processor. Since each processor accesses the corresponding load status counter, it is possible to efficiently control a dynamic parallelism, as mentioned below.
(1) It is possible for each processor to exclusively access the load status counter by the counter lock instruction and the counter unlocking instruction. Namely, after the load status counter is locked by a certain processor on the counter lock instruction, it is possible to decide whether not not the forking is dynamically performed, on the basis of the value of the locked load status counter referred to. When the forking is not performed, the lock of the load status counter is unlocked by the counter unlocking instruction. Thus, it is possible to realize the parallelism in accordance with the load status by a software control.
(2) When the thread is forked by a certain processor, the value of the load status counter corresponding to the certain processor is increased, and then, decreased when the certain processor completes the execution of the thread. Thus, the load status counter can simply indicate the dynamic load status.
(3) With the high level function of the fork instruction, when the fork instruction is generated, the thread managing means is referred to, so as to discriminate from the value of the load status counter whether or not the fork is possible. If the fork is not possible, the corresponding thread is automatically sequentially executed, so that the performance based on the multithreaded parallel processing can be elevated. This operation based on the fork instruction is dynamically parallel-controlled on the basis of the load status by the hardware control, not by the software control.
(4) The fork instruction in the prior art designates the processor which forks the thread. By using the thread managing means in the present invention, the method for controlling the fork instruction is modified to fork the thread by the processor having a light load condition. Accordingly, more feasible parallel processing becomes possible.
(5) In a certain case, the effectivity of the program execution becomes high if it is previously known before the thread is forked, whether or not the forking of a thread is possible. In this case, the thread managing means is accessed by the thread security instruction to secure whether or not execution of the thread is possible. If the thread is possible, the value of the load status counter is previously increased, Thereafter, the fork instruction is actually executed. In this case, an effective programming becomes possible. Incidentally, there is not required a function for increasing the value of the load status counter in connection with the fork instruction used after the thread securing instruction.

Thus, according to the present invention, the dynamic control of the parallelism can be performed by a simple hardware, so that the parallel processing using the thread can be made efficient.

The invention has thus been shown and described with reference to the specific embodiments. However, it should be noted that the present invention is in no way limited to the details of the illustrated structures but changes and modifications may be made.

## Claims

1. A processor system comprising:
a plurality of processors each including a fork message generating means for outputting to another processor a fork message forking a thread composed of a plurality of instructions, a fork message storing means for storing a fork message supplied from another processor, and an instruction pipeline means receiving said fork message from said fork message storing means for sequentially executing the instructions included in the threads included in the received fork message, each processor being provided with a control method including a fork instruction for forking a thread, so that when said fork instruction is executed in one processor of said processor, the thread is forked, and on the other hand, the thread forked by another processor of said processors is supplied through said fork message generating means of said another processor, whereby said plurality of instructions of said thread are executed by said instruction pipeline means so as to realize a parallel processing, and
a thread managing means provided in common to said processors, and having a plurality of load status counters each provided for a corresponding processor of said processors to indicate a load status of said corresponding processor, all of said load status counters being accessible from each of said processors.

2. A method for controlling the processor system claimed in Claim 1 wherein when the fork instruction is executed by one processor of said processors so that the thread is forked in said one processor, said load status counters are referred to by said one processor.

3. A method claimed in Claim 2 wherein a load status counter lock instruction is previously defined, and wherein when said load status counter lock instruction is executed by one processor of said processors, said one processor locks said load status counters in said thread managing means so that the value of said load status counters cannot be updated by said processors other than said one processor.

4. A method claimed in Claim 3 wherein a load status counter unlocking instruction is previously defined, and wherein when said load status counter unlocking instruction is executed by one processor of said processors, said one processor unlocks said load status counters in said thread managing means so that the value of said load status counters can be updated by said processors other than said one processor.

5. A method claimed in Claim 2 wherein said load status counters are unlocked when the fork instruction is executed by one processor of said processors so that the thread is forked in said one processor.

6. A method claimed in Claim 2 wherein when the fork instruction is executed by one processor of said processors so that the thread is forked in said one processor, the value of a corresponding load status counter of said load status counters is increased, and when execution of said thread is completed by said one processor, the value of a corresponding load status counter of said load status counters is decreased.

7. A method claimed in Claim 2 wherein when the fork instruction is executed by one processor of said processors so that the thread is forked in said one processor, said thread managing means is exclusively referred to by said one processor so as to compare whether or not the value of said load status counters is not higher than a predetermined constant value, for the purpose of discriminating whether or not said thread can be forked, so that when said thread can be forked, said thread is forked and when said thread cannot be forked, said one processor sequentially executes said thread.

8. A method claimed in Claim 2 wherein when the fork instruction is executed by one processor of said processors so that the thread is forked in said one processor, the value of said load status counters is referred to so as to determine which of said processors should execute said thread forked.

9. A method claimed in Claim 2 wherein when a thread security instruction is previously defined, and wherein when said thread security instruction is executed by one processor of said processors, said one processor refers to said thread managing means so as to ascertain whether or not said thread is forked, so that if said thread can be forked, the value of a corresponding load status counter is increased.
